# EUROPÄISCHE PATENTSCHRIFT

(11) **EP 1 694 979 B1**
(45) Veröffentlichungstag und Bekanntmachung des Hinweises auf die Patenterteilung: **20.01.2010**
(21) Anmeldenummer: 04802729.6
(22) Anmeldetag: 13.11.2004
(51) Int. Cl.: F16D 69/02

(54) **REIBMATERIAL**
FRICTION MATERIAL
MATERIAU DE FRICTION

(30) Priorität: 12.12.2003 DE 10358776
(43) Veröffentlichungstag der Anmeldung: 30.08.2006
(73) Patentinhaber: LuK Lamellen und Kupplungsbau Beteiligungs KG, 77815 Bühl (DE)
(72) Erfinder: STEINMETZ, Stefan, 76879 Essingen (DE); ELISON, Hans-Dieter, 77815 Bühl (DE); MEIERS, Jörg, 77815 Bühl (DE); KRAUS, Martin, 77830 Bühlertal (DE); RUNGE, Oliver, 77815 Bühl (DE)
(86) Internationale Anmeldenummer: PCT/DE2004/002513
(87) Internationale Veröffentlichungsnummer: WO 2005/057042

(56) Entgegenhaltungen:
- EP-A- 0 497 751
- EP-A- 0 731 287
- WO-A-95/25231
- US-A- 5 725 077

## Beschreibung

Die Erfindung betrifft Reibmaterialien bzw. Stoffmischungen für die Herstellung von Reibmaterialien, die insbesondere für den Einsatz bei Kupplungsscheiben und Bremsen gedacht, also zur Drehmomentübertragung bzw. Drehmomentabstützung. Reibmaterialien, die aus einer Mischung verschiedener Stoffe bestehen, sind bekannt.

Reibmaterialien zur Verwendung in Verbindung mit Kupplungsscheiben bestehen beispielsweise aus einer Mischung von Fasern, wie z.B. Mineralfasern, Füllmittel und Bindemittel sowie ggf. weiteren Zusätzen, die die Reib- und Verschleißeigenschaften sowie Temperaturbeständigkeit beeinflussen.

Der vorliegenden Erfindung lag die Aufgabe zugrunde, Reibmaterialzusammensetzungen bzw. Gemische für die Herstellung von Reibmaterialien und daraus hergestellte Reibbeläge zu schaffen, die thermisch und mechanisch hoch belastbar sind und dennoch einen verhältnismäßig hohen Reibwert gewährleisten. Dabei soll weiterhin über einen großen Temperaturbereich eine gute Reibwertkonstanz sichergestellt werden. Weiterhin sollen die erfindungsgemäßen Mischungen bzw. die daraus hergestellte Reibbeläge eine praktisch rupffreie Drehmomentübertragung durch Reibeingriff gewährleisten, wodurch z.B. bei Verwendung derartiger Reibbeläge in Zusammenhang mit Kraftfahrzeug- Kupplungsscheiben der Fahrkomfort wesentlich erhöht werden kann.

Die der Erfindung zugrunde liegenden Aufgaben werden gemäß einem Ausführungsbeispiel dadurch gelöst, dass das Reibmaterial aus wenigstens zwei Stoffkomponenten besteht, die zumindest ein Polyimid und/oder Polyamidimid in Verbindung mit wenigstens einem Phosphat auf dem groben Alkaliphosphaten, Erdalkaliphosphaten und Ammoniumphosphaten umfassen.

Die erfindungsgemäßen Aufgaben lassen sich auch in vorteilhafter Weise durch Verwendung von Reibbelägen lösen, welche auf der Basis einer Stoffkomponentenmischung hergestellt sind, die zumindest ein Polyimid und/oder Polyamidimid in Verbindung mit wenigstens einem Metallsulfid enthält. Anstelle wenigstens eines Metallsulfids, oder zusätzlich zu einem solchen, kann auch wenigstens ein Metalloxyd Verwendung finden.

Durch Verwendung eines Polyimid kann die Temperaturbeständigkeit des Reibbelages erheblich gesteigert werden, da Polyimid hohe Temperaturen beispielsweise bis circa 400° Celsius Stand hält. Durch Beimischung von wenigstens einem Phosphat aus den Gruppen Alkaliphosphaten, Erdalkaliphosphaten und Ammoniumphosphaten kann eine Erhöhung des Reibwertes erzielt werden unter Beibehaltung eines verhältnismäßig niedrigen Verschleißes des Reibmaterials. In vorteilhafter Weise kann dabei der Anteil an Phosphat 1 bis 25 Gewichtsprozente betragen. Unter Gewichtsprozenten ist der gewichtsmäßige Anteil des Gesamtgewichts an trocken gemischten Stoffkomponenten gemeint. Die Gewichtsanteile der meisten einen Reibbelag bildenden Stoffe sind auch im fertigen Reibbelag vorhanden. Als besonders vorteilhaft hat sich die Verwendung von Tricalciumphosphat und/oder Trinatriumphosphat erwiesen.

Die Beimischung wenigstens eines Metallsulfids ermöglicht ebenfalls Reibbeläge mit einer guten Verschleißresistenz herzustellen. Als besonders zweckmäßig hat sich die Verwendung von wenigstens einem der folgenden Sulfide erwiesen, nämlich Zinnsulfid, Bismutsulfid, Eisensulfid oder Mangansulfid.

Sofern wenigstens ein Metalloxyd Verwendung findet, so kann in vorteilhafter Weise Zinnoxyd und/oder Zinkoxyd und/oder Manganoxyd und/oder Eisenoxyd Verwendung finden.

Der gewichtsmäßige Anteil an Polyimid und/oder Polyamidimid kann 20 bis 60 Prozent betragen. Diese Stoffe können in eine harzförmige und/oder pulverförmige und/oder in einen granulatförmigen Zustand oder aus einer Kombination dieser Strukturen beigemischt werden.

In vorteilhafter Weise können auch andere harzförmige, pulverförmige oder granulatförmige Bindemittel beigemischt werden.

Um die Verschleiß- und Reibeigenschaften an den jeweiligen Einsatzfall anpassen zu können, kann es vorteilhaft sein, zumindest eines der folgenden Metalle, nämlich Kupfer, Messing, Zinn und Zink beizumischen. Der Anteil an Metall kann dabei 1 bis 30 Gewichtsprozente betragen. Derartige Metallzusätze können in Form von Pulver, Fasern oder Späne beigefügt werden.

In vorteilhafter Weise kann Cyanester beigemischt werden. Der Gewichtsanteil an Cyanester kann 10 bis 30 Prozent betragen.

Weiterhin kann in vorteilhafter Weise wenigstens ein Füllstoff beigemengt werden, wobei es sich dabei um wenigstens einer der folgenden Stoffe handeln kann, nämlich Bariumsulfat, Calciumcarbonat, Kaolin, Microhohlkugeln, Magnesiumcarbonat. Der Anteil an Füllstoffe kann dabei 10 bis 50 Prozent betragen.

In vorteilhafter Weise können auch Fasern beigemischt werden, die aus wenigstens einer der folgenden Fasersorten bestehen, nämlich Carbonfasern, Aramidfasern, Glasfasern, Metallfasern, Keramikfasern.

Durch die Verwendung derartiger Fasern kann die Berstfestigkeit des Reibbelages erhöht werden. Der Einsatz derartiger Fasern ermöglicht jedoch auch den Reibwert der damit versehenen Reibbeläge und auch das Verschleißverhalten an den speziellen Anwendungsfall anzupassen. Der Gesamtfaseranteil kann dabei 1 bis 50 Gewichtsprozente betragen.

Weiterhin kann es besonders zweckmäßig sein, wenn ein so genanntes Schmiermittel beigemengt wird, wobei dieses aus wenigstens einem der folgenden Stoffe bestehen kann, nämlich Koks, Grafit, Ruß, Metallsulfide. Die Beimischung derartiger Stoffe ermöglicht ebenfalls das Verschleißverhalten sowie den Reibwert des fertigen Reibbelages zu beeinflussen. So kann beispielsweise durch das Zumischen von Koks, Grafit usw. ein zunächst zu hoher Reibwert auf eine gewünschte Größe reduziert werden, wobei gleichzeitig zumindest bei manchen Mischungen die Verschleißresistenz des Reibbelages erhöht werden kann.

In vorteilhafter Weise beträgt der Gesamtgewichtsanteil an Phosphate und Schmiermittel 10 bis 50 Gewichtsprozente.

## Patentansprüche

1. Reibmaterial bestehend aus wenigstens zwei Stoffkomponenten, **dadurch gekennzeichnet, dass** es als Stoffkomponenten zumindest ein Polyimid und/oder Polyamidimid und Cyanester mit Beimischung von wenigstens einem Metallsulfid enthält, wobei es Cyanester mit einem Gewichtsanteil von 10 bis 30 % enthält.

2. Reibmaterial nach Anspruch 1, **dadurch gekennzeichnet, dass** dieses 20 bis 60 Gewichtsprozente Polyimid und/oder Polyamidimid enthält.

3. Reibmaterial nach einem der Ansprüche 1 oder 2, **dadurch gekennzeichnet, dass** dieses 1 bis 25 Gewichtsprozenten Phosphat enthält.

4. Reibmaterial nach Anspruch 2, **dadurch gekennzeichnet, dass** wenigstens ein Phosphat aus den Gruppen Alkaliphosphaten, Erdalkaliphosphaten und Ammoniumphosphaten enthält.

5. Reibmaterial nach einem der Ansprüche 1 bis 4, **dadurch gekennzeichnet, dass** Tricalciumphosphat und/oder Trinatriumphosphat verwendet wird.

6. Reibmaterial nach einem der Ansprüche 2 bis 5, **dadurch gekennzeichnet, dass** es zumindest ein Metallsulfid enthält.

7. Reibmaterial nach Anspruch 6, **dadurch gekennzeichnet, dass** es wenigstens eines der folgenden Sulfide enthält, nämlich Zinnsulfid, Bismutsulfid, Eisensulfid, Mangansulfid.

8. Reibmaterial nach einem der Ansprüche 1 bis 7, **dadurch gekennzeichnet, dass** es als Füllstoff wenigstens eines der folgenden Stoffe enthält, nämlich Bariumsulfat, Calciumcarbonat, Kaolin, Microhohlglaskugeln, Magnesiumcarbonat.

9. Reibmaterial nach Anspruch 8, **dadurch gekennzeichnet, dass** der Anteil an Füllstoff 10 bis 50 Gewichtsprozentenantelle beträgt.

10. Reibmaterial nach einem der Ansprüche 1 bis 9, **dadurch gekennzeichnet, dass** es Fasern enthält, die aus wenigstens einer der folgenden Fasersorten bestehen, nämlich: Carbonfasem, Aramidfasern, Glasfasern, Metallfasern, Keramikfasern.

11. Reibmaterial nach Anspruch 10, **dadurch gekennzeichnet, dass** der Faseranteil 1 bis 50 Gewichtsprozente des Gesamtgewichtes beträgt.

12. Reibmaterial nach einem der Ansprüche 1 bis 13, **dadurch gekennzeichnet, dass** es als Schmiermittel wenigstens eines der folgenden Stoffe enthält, nämlich: Koks, Grafit, Ruß, Metallsulfide.

13. Reibmaterial nach einem der Ansprüche 1 bis 12, **dadurch gekennzeichnet, dass** der Gewichtsanteil an Phosphate und Schmiermittel 10 bis 50 Prozent beträgt.

14. Reibmaterial nach einem der Ansprüche 1 bis 13, **dadurch gekennzeichnet, dass** es wenigstens ein Metall enthält, dass in einer der folgenden Formen beigemischt ist, nämlich: Spanförmig, Faserförmig oder Pulverförmig.

15. Reibmaterial nach Anspruch 14, **dadurch gekennzeichnet, dass** es zumindest eines der folgenden Metalle enthält, nämlich: Kupfer, Messing, Zinn, Zink.

16. Reibmaterial nach Anspruch 13 oder 14, **dadurch gekennzeichnet, dass** der Metallanteil 1 bis 30 Gewichtsprozente beträgt.

17. Reibmaterial nach einem der Ansprüche 1 bis 16, **dadurch gekennzeichnet, dass** es zumindest ein Metalloxyd enthält.

18. Reibmaterial nach einem der Ansprüche 1 bis 17, **dadurch gekennzeichnet, dass** es wenigstens eines der folgenden Metalloxyde enthält, nämlich Zinnoxyd, Zinkoxyd, Manganoxyd, Eisenoxyd.

## Claims

1. Friction material comprising at least two material components, **characterized in that** the material components present in said friction material are at least one polyimide and/or polyamideimide and cyano ester with the addition of at least one metal sulphide, wherein said friction material contains cyano ester in an amount of from 10 to 30% by weight.

2. Friction material according to Claim 1, **characterized in that** it contains 20 to 60% by weight of polyimide and/or polyamideimide.

3. Friction material according to either of Claims 1 and 2, **characterized in that** it contains 1 to 25% by weight of phosphate.

4. Friction material according to Claim 2, **characterized in that** it contains at least one phosphate from the groups of alkali metal phosphates, alkaline earth metal phosphates and ammonium phosphates.

5. Friction material according to one of Claims 1 to 4, **characterized in that** tricalcium phosphate and/or trisodium phosphate is used.

6. Friction material according to one of Claims 2 to 5, **characterized in that** it contains at least one metal sulphide.

7. Friction material according to Claim 6, **characterized in that** it contains at least one of the following sulphides: tin sulphide, bismuth sulphide, iron sulphide and manganese sulphide.

8. Friction material according to one of Claims 1 to 7, **characterized in that** the filler present in said friction material is at least one of the following materials: barium sulphate, calcium carbonate, kaolin, hollow glass microspheres and magnesium carbonate.

9. Friction material according to Claim 8, **characterized in that** the filler content is 10 to 50% by weight.

10. Friction material according to one of Claims 1 to 9, **characterized in that** it contains fibres comprising at least one of the following types of fibre: carbon fibres, aramid fibres, glass fibres, metal fibres and ceramic fibres.

11. Friction material according to Claim 10, **characterized in that** the fibre content is 1 to 50% by weight of the total weight.

12. Friction material according to one of Claims 1 to 11, **characterized in that** it contains at least one of the following materials as lubricant: coke, graphite, carbon black, metal sulphides.

13. Friction material according to one of Claims 1 to 12, **characterized in that** the content of phosphates and lubricant is from 10 to 50% by weight.

14. Friction material according to one of Claims 1 to 13, **characterized in that** it contains at least one metal admixed in one of the following forms: chip form, fibrous form or pulverulent form.

15. Friction material according to Claim 14, **characterized in that** it contains at least one of the following metals: copper, brass, tin, zinc.

16. Friction material according to Claim 13 or 14, **characterized in that** the metal content is from 1 to 30% by weight.

17. Friction material according to one of Claims 1 to 16, **characterized in that** it contains at least one metal oxide.

18. Friction material according to one of Claims 1 to 17, **characterized in that** it contains at least one of the following metal oxides: tin oxide, zinc oxide, manganese oxide, iron oxide.

## Revendications

1. Matériau de friction, consistant en au moins deux composants de matière, **caractérisé en ce qu'**il contient en tant que composants de matière au moins un polyimide et/ou polyamide-imide et cyano-ester avec addition d'au moins un sulfure métallique, le cyano-ester étant contenu en une proportion pondérale de 10 à 30 %.

2. Matériau de friction selon la revendication 1, **caractérisé en ce qu'**il contient de 20 à 60 % en poids de polyamide et/ou polyamide-imide.

3. Matériau de friction selon la revendication 1 ou 2, **caractérisé en** en ce qu'il contient de 1 à 25 % en poids de phosphate.

4. Matériau de friction selon la revendication 2, **caractérisé en ce qu'**il contient au moins un phosphate choisi dans les groupes constitués par les phosphates de métaux alcalins, les phosphates de métaux alcalino-terreux et les phosphates d'ammonium.

5. Matériau de friction selon l'une quelconque des revendications 1 à 4, **caractérisé en ce qu'**on utilise du phosphate tricalcique et/ou du phosphate trisodique.

6. Matériau de friction selon l'une quelconque des revendications 2 à 5, **caractérisé en ce qu'**il contient en outre un sulfure métallique.

7. Matériau de friction selon la revendication 6, **caractérisé en ce qu'**il contient au moins l'un des sulfures suivants, à savoir sulfure d'étain, sulfure de bismuth ; sulfure de fer, sulfure de manganèse.

8. Matériau de friction selon l'une quelconque des revendications 1 à 7, **caractérisé en ce qu'**il contient en tant que charge au moins l'une des substances suivantes, à savoir sulfate de baryum, carbonate de calcium, kaolin, microbilles de verre creuses, carbonate de magnésium.

9. Matériau de friction selon la revendication 8, **caractérisé en ce que** la teneur en charge va de 10 à 50 % en poids.

10. Matériau de friction selon l'une quelconque des revendications 1 à 9, **caractérisé en ce qu'**il contient des fibres qui consistent en au moins l'un des types de fibres suivants, à savoir : fibres de carbones, fibres d'aramide, fibres de verre, fibres métalliques, fibres de céramique.

11. Matériau de friction selon la revendication 10, **caractérisé en ce que** la proportion de fibres va de 1 à 50 % en poids du poids total.

12. Matériau de friction selon l'une quelconque des revendications 1 à 11, **caractérisé en ce qu'**il contient comme lubrifiant au moins l'une des substances suivantes, à savoir : coke, graphite, noir de carbone, sulfures métalliques.

13. Matériau de friction selon l'une quelconque des revendications 1 à 12, **caractérisé en ce que** la teneur pondérale en phosphate et lubrifiant va de 10 à 50 % en poids.

14. Matériau de friction selon l'une quelconque des revendications 1 à 13, **caractérisé en ce qu'**il contient au moins un métal, qui est ajouté sous l'une des formes suivantes, à savoir sous forme de copeaux, sous forme de fibres ou sous forme de poudre.

15. Matériau de friction selon la revendication 14, **caractérisé en ce qu'**il contient au moins l'un des métaux suivants, à savoir : cuivre, laiton, étain, zinc.

16. Matériau de friction selon la revendication 13 ou 14, **caractérisé en ce que** la teneur en métal va de 1 à 30 % en poids.

17. Matériau de friction selon l'une quelconque des revendications 1 à 16, **caractérisé en ce qu'**il contient au moins un oxyde métallique.

18. Matériau de friction selon l'une quelconque des revendications 1 à 17, **caractérisé en ce qu'**il contient au moins l'un des oxydes métalliques suivants, à savoir oxyde d'étain, oxyde de zinc, oxyde de manganèse, oxyde de fer.
